## Europäisches Patentamt
## European Patent Office
## Office européen des brevets

(11) Veröffentlichungsnummer: **0 016 463**
**B1**

# EUROPÄISCHE PATENTSCHRIFT

(45) Veröffentlichungstag der Patentschrift:
**25.05.83**

(51) Int Cl³· **G 21 F 9/16**

(21) Anmeldenummer· **80101449.9**

(22) Anmeldetag. **19.03.80**

(54) Schneckenmaschine zum Einbetten radioaktiver Abfälle in eine thermoplastische Masse.

(30) Priorität **21.03.79 DE 2911135**

(43) Veröffentlichungstag der Anmeldung:
**01.10.80 Patentblatt 80/20**

(45) Bekanntmachung des Hinweises auf die Patenterteilung:
**25.05.83 Patentblatt 83/21**

(84) Benannte Vertragsstaaten
**CH FR**

(56) Entgegenhaltungen:
**DE-A-2 100 314**
**DE-A-2 740 490**
**FR-A-2 254 861**

(73) Patentinhaber: **KRAFTWERK UNION AKTIENGESELLSCHAFT, Wiesenstrasse 35, D-4330 Mülheim (Ruhr) (DE)**

(72) Erfinder: **Puthawala, Anwer, Dipl.-Ing., Weiselstrasse 46, D-8520 Erlangen-Buckenhof (DE)**
Erfinder: **Hoffmann, Lutz, Am Europakanal 38, D-8520 Erlangen (DE)**
Erfinder: **Meintker, Manfred, Dipl.-Ing., Am Europakanal 14, D-8520 Erlangen (DE)**

(74) Vertreter: **Mehl, Ernst, Dipl.-Ing., Postfach 22 01 76, D-8000 München 22 (DE)**

Schneckenmaschine zum Einbetten radioaktiver Abfälle in eine thermoplastische Masse

Die Erfindung betrifft eine Schneckenmaschine mit einer in einem Gehäuse drehbaren Schnecke zum Einbetten radioaktiver Abfälle in eine thermoplastische Masse, insbesondere Bitumen, wobei an der Oberseite des Gehäuses ein rohrförmiger Dampfdom mit annähernd vertikaler Achse zum Anschluß einer Absaugleitung angeordnet ist, wobei der Dampfdom während des Betriebes mittels einer Leitung, die an dem dem Gehäuse abgekehrten Ende des Dampfdomes angeordnet ist, derart benetzbar ist, daß eine in den Bereich der Schnecke führende Flüssigkeitsströmung entsteht.

Eine solche Schneckenmaschine ist aus der DE-A-2 740 490 bekannt. Dabei ist in einem Deckel des Dampfdomes ein Kanal mit einem äußeren Anschluß für ein Spülmittel zur Reinigung von Schaugläsern vorgesehen, das auch zur Spülung der Innenseite des Dampfdomes benutzt werden kann, wenn man nicht eine besondere Dampflanze mit einem zentralen Zuführungsrohr vorsieht, die mit Auslaßdüsen bis in den Bereich der Rohrwandung geführt ist.

Ferner sind bei einer aus der französischen Patentschrift FR-A-2 254 861 bekannten Schneckenmaschine mehrere Dampflanzen in der Nähe der Dampfdomwand angeordnet, die ebenfalls in vertikaler Richtung in den Dampfdom ragen.

Diese Dampflanzen gehen von einem ringförmigen Zuführungsrohr aus, das in die Oberseite des Dampfdomes oberhalb einer Auslaßöffnung eingebaut ist.

Die bekannten Reinigungseinrichtungen sind relativ aufwendig, wenn eine gleichmäßige Spülung erreicht werden soll, und in Form der langgestreckten Lanzen auch mechanisch empfindlich. Dies ist deswegen bedenklich, weil Reparaturen an Schneckenmaschinen nach einer bestimmten Betriebsdauer durch die radioaktive Kontamination stark behindert sind. Deshalb ist es Aufgabe der Erfindung, die Einrichtungen zur Reinigung des Dampfdomes zu vereinfachen.

Gemäß der Erfindung wird die Aufgabe einmal dadurch gelöst, daß die Leitung ein der Wand des Dampfdomes angepaßtes Ringrohr ist, das gegen die Wand gerichtete Austrittsöffnungen aufweist. Hier gelangt die Reinigungsflüssigkeit aus dem stabilen Ringrohr auf kurzem Wege an die Dampfdomwand, wo sie durch ihr Herunterrinnen Verschmutzungen, insbesondere angesetzte Salze, ablösen kann. Die Gleichmäßigkeit der Benetzung ist dabei durch Austrittsöffnungen gegeben, die als Bohrungen des Ringrohres einfach herzustellen sind.

Bei Schneckenmaschinen der eingangs genannten Art, bei denen der Dampfdom mit einem über die Länge des Dampfdomes reichenden Mantel mit einem Anschluß ausgestattet ist, kann die vorgenannte Aufgabe auch dadurch gelöst werden, daß der Mantel über ein Ventil wahlweise mit einem Kühlmittel oder mit einem Heizmedium beaufschlagbar ist.

Wird der Mantel als Kühleinrichtung eingesetzt, so ergibt sich die erstaunliche Wirkung, daß durch Niederschlagen des sonst abgezogenen Dampfes Flüssigkeit entsteht, die an der Dampfdomwand herabrinnt und für die gewünschte Reinigung ausreicht. Besonders günstig ist dabei, daß der Mantel über das Ventil wahlweise auch mit einem Heizmedium beaufschlagbar ist. Solche Heizmäntel werden, wie beschrieben in der DE-A-2 740 490, für den Normalbetrieb der Schneckenmaschine vorteilhaft eingesetzt, um das Verkleben des Dampfdomes durch Bitumentröpfchen zu unterbinden.

Zur näheren Erläuterung der Erfindung wird anhand der beiliegenden Zeichnung ein Ausführungsbeispiel beschrieben, das in Fig. 1 in einer Seitenansicht zum Teil im Schnitt die Schneckenmaschine als Ganzes zeigt. In den Fig. 2 und 3 ist ein Dampfdom in größerem Maßstab in einem Vertikalschnitt und einer Draufsicht gezeigt.

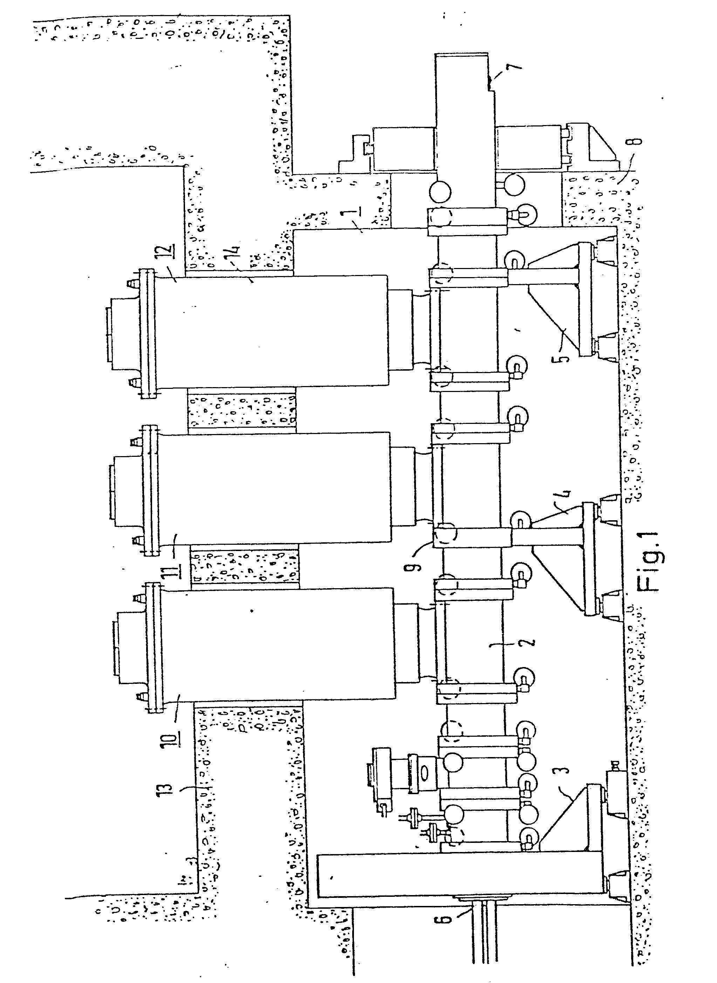

Die in Fig. 1 gezeichnete Schneckenmaschine 1 dient zum Einbetten von schwach bis mittelaktivem Abfall aus der Kühlwasseraufbereitung eines Druckwasser-Leistungsreaktors in Bitumen, das zur Endlagerung des radioaktiven Abfalls in Fässer eingefüllt wird. Die Schneckenmaschine 1 besitzt ein aus mehreren Teilen zusammengeflanschtes Gehäuse 2, das auf Stützen 3, 4 und 5 ruht. Das Gehäuse 2 enthält zwei Schneckenwellen 6, die zu einem auf der in Fig. 1 rechten Seite gelegenen Auslaß 7 führen. Dort werden nicht weiter dargestellte Fässer für die Aufnahme der Abfall-Bitumen-Mischung bereitgestellt. Die ganze Maschine 1 ist in ein Betonbauwerk 8 zur Strahlenabschirmung eingesetzt.

An der Oberseite 9 der Maschine 1 sind drei Dampfdome 10, 11 und 12 mit vertikaler Achse vorgesehen, die gleich ausgebildet sind und durch den Teil 13 der Betonwand 8 ragen. Die Dampfdome 10, 11 und 12 sind mit Kondensatoren 14 kombiniert. Sie umfassen im Bereich ihrer unteren Stirnseite 15, d. h. an der Berührungsstelle mit der Schneckenmaschine 1, ein im Querschnitt rechteckiges Rohrstück 16, das mit Dehnschrauben 17 gegen das Gehäuse 2 der Maschine 1 gepreßt wird. An dieses schließt sich oben ein ebenfalls im Querschnitt rechteckiges Rohr 18 an, dessen freie Stirnseite 19 von einem Flanschteil 20 gebildet wird. Der Außenrand 21 des Flanschteiles ist rund und mit zwei Lippen 22 und 23 versehen. Von diesen erstrecken sich konzentrische Rohre 24 und 25 mit Kreisquerschnitt nach unten.

An das Rohr 24 ist unten ein im Querschnitt U-förmiges Profilstück 26 angeschweißt. Das innere Rohr 25 führt zu einem Vorsprung 27, der zum Rohrstück 16 gehört. Damit entsteht zwischen dem im Querschnitt rechteckigen Rohr 18 und dem Kreisrohr 25 ein Mantel 28, der über Anschlüsse 29 mit Dampf beheizbar ist. Beim Ausführungsbeispiel handelt es sich um gesättigten Niederdruckdampf von 10 bar.

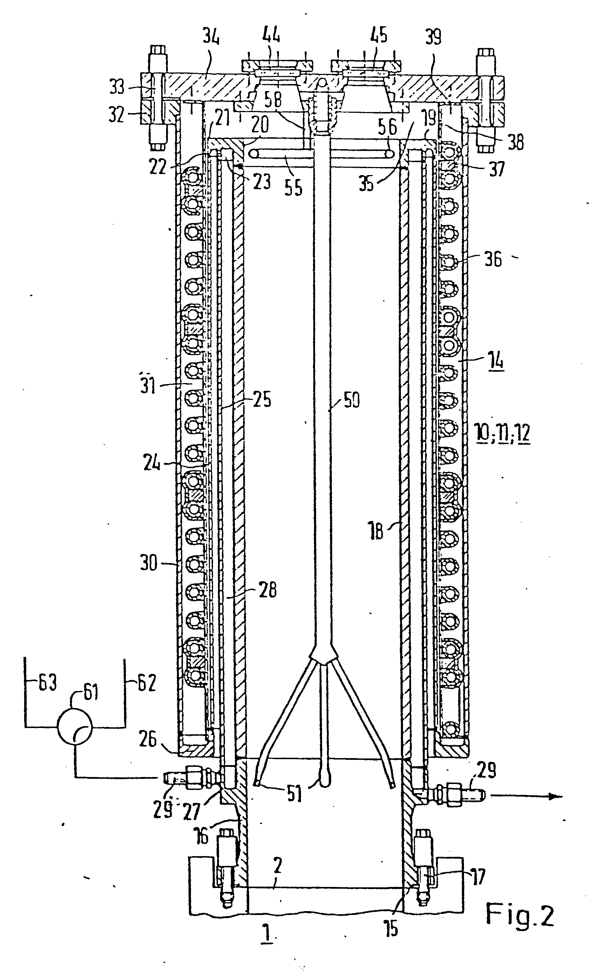

Von dem Profilstück 26 erstreckt sich ein Rohr 30 nach oben, das mit dem Rohr 24 einen zylindrischen Ringraum 31 einschließt. Am freien Ende des Rohres 30 ist ein Flansch 32 angeschweißt. Dort ist mit Dehnschrauben 33 ein Deckel 34 befestigt, der, wie Fig. 2 deutlich zeigt, gemeinsam das Rohr 18 des Dampfdomes und den Ringraum 31 abschließt.

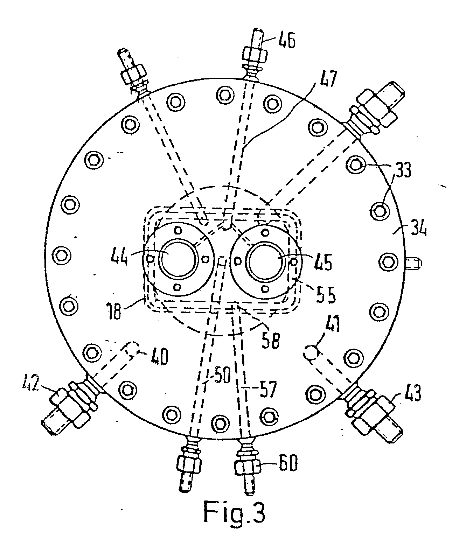

Der Ringraum 31 dient als Kondensator, der mit dem Rohr 18 an dessen freien Ende über einen Ringspalt 35 verbunden ist. Er enthält zur Kühlung eine bifilar gewickelte Rohrspirale 36, die mit Schellen 37 an Haltestegen 38 angebracht ist. Die Haltestege 38 werden mit Schrauben 39 von unten gegen den Deckel 34 gepreßt. An dem Deckel 34 sind auch die beiden Enden 40 und 41 der Rohrspirale 36 befestigt, wie in Fig. 3 gezeigt ist. Mithin kann die Rohrspirale von Anschlußnippeln 42 und 43 des Deckels aus mit Kühlwasser gespeist werden.

Der Deckel 34 enthält beim Ausführungsbeispiel zwei Schaugläser 44 und 45, die das Betrachten des Dampfdomes 10, 11, 12 und des Kondensators 14 gestatten. Dabei kann das eine der beiden Schaugläser zum Beobachten und das andere zum Beleuchten mit einer geeigneten Lichtquelle benutzt werden.

Wie insbesondere aus Fig. 3 hervorgeht, kann von einem äußeren Anschluß 46 durch einen Kanal 47 im Deckel 34 ein Spülmittel gegen die Schaugläser 44 und 45 gespritzt werden, mit dem evtl. ansetzende Verschmutzungen abgelöst werden können. Ein weiterer Kanal speist eine Dampflanze 50, die beim Ausführungsbeispiel mit Auslaßdüsen 51 bis in den Bereich des Gehäuses 1 führt.

Im Rohr 18 ist an dem der Schneckenmaschine abgekehrten Ende ein seiner Kontur angepaßtes Ringrohr 55 angeordnet, das als Sprühleitung schräg nach unten gegen die Innenseite des Rohres 18 gerichtete Öffnungen 56 aufweist. Das Rohr 55 ist über ein Verbindungsstück 58 an den Deckel 34 angeschlossen, das zugleich den mechanischen Halt für das Rohr 55 bildet. Das Rohr 58 führt zu einem Kanal 57 im Deckel 34, der außerhalb des Deckels 34 in einem Anschlußstutzen 60 endet.

Durch den Stutzen 60 kann chemisch neutrales Wasser zum Benetzen der Innenseite des Rohres 18 eingesprüht werden, mit dem während des Betriebes der Schneckenmaschine eine evtl. an der Innenseite des Dampfdomes 10, 11, 12 ansetzende Verkrustung durch Salze abgewaschen wird. Die dazu notwendige Wassermenge beträgt nur etwa 50 l für einen Spülvorgang, der sich über etwa 10 min erstreckt.

Während des Spülvorganges rinnt das an die Innenseite des Rohres 18 gesprühte Wasser durch die Schwerkraft am Rohr herunter. Damit wird die gelöste Verkrustung in die laufenden Schnecken 6 geführt und deshalb in das mit der Schneckenmaschine verarbeitete Abfall-Bitumen-Gemisch eingebettet. Man erreicht dadurch eine Reinigung, die die sonst notwendigen Abschaltungen der Schneckenmaschine und Wartungsarbeiten vermeidet, ohne daß durch den Spülvorgang neue Probleme entstehen, die sonst, etwa bei einem besonderen Waschvorgang ohne Laufen der Schnecken, wegen der Radioaktivität der gelösten Verkrustungen zu befürchten wären.

Eine alternative Möglichkeit besteht darin, daß der Mantel 28 des Rohres 18 durch ein an den Anschlußstellen 29 angebrachtes Ventil 61 während des Betriebes der Schnecken 6 für eine bestimmte Zeit, zum Beispiel für etwa 30 min., statt mit Dampf aus der Leitung 62 mit einem Kühlmedium aus einer Leitung 63, insbesondere mit Wasser von höchstens Raumtemperatur, beaufschlagt wird.

Dies führt zu einer Kondensation des aus der Schneckenmaschine in die Dome aufsteigenden Dampfes und ergibt damit eine in den Bereich der Schnecken 6 führende Flüssigkeitsströmung.

**Patentansprüche**

1. Schneckenmaschine mit einer in einem Gehäuse drehbaren Schnecke zum Einbetten radioaktiver Abfälle in eine thermoplastische Masse, insbesondere Bitumen, wobei an der Oberseite des Gehäuses ein rohrförmiger Dampfdom mit annähernd vertikaler Achse zum Anschluß einer Absaugleitung angeordnet ist, wobei der Dampfdom während des Betriebes mittels einer Leitung, die an dem dem Gehäuse abgekehrten Ende des Dampfdomes angeordnet ist, derart benetzbar ist, daß eine in den Bereich der Schnecke führende Flüssigkeitsströmung entsteht, dadurch gekennzeichnet, daß die Leitung ein an der Wand des Dampfdomes angepaßtes Ringrohr (55) ist, das gegen die Wand gerichtete Austrittsöffnungen (56) aufweist.

2. Schneckenmaschine mit einer in einem Gehäuse drehbaren Schnecke zum Einbetten radioaktiver Abfälle in eine thermoplastische Masse, insbesondere Bitumen, wobei an der Oberseite des Gehäuses ein rohrförmiger Dampfdom mit annähernd vertikaler Achse zum Anschluß einer Absaugleitung angeordnet ist, wobei der Dampfdom während des Betriebes mittels einer Leitung, die an dem dem Gehäuse abgekehrten Ende des Dampfdomes angeordnet ist, derart benetzbar ist, daß eine in den Bereich der Schnecke führende Flüssigkeitsströmung entsteht, wobei der Dampfdom mit einem über die Länge des Dampfdomes reichenden Mantel mit einem Anschluß ausgestattet ist, dadurch gekennzeichnet, daß der Mantel (28) über ein Ventil (61) wahlweise mit einem Kühlmittel (Leitung 63) oder mit einem Heizmedium (Leitung 62) beaufschlagbar ist.

**Claims**

1. A worm machine having a worm which is rotatable in a housing for embedding radioactive waste in a thermoplastic mass, in particular bitumen, in which on the upper side of the housing, there is arranged a tubular steam dome having a substantially vertical axis, for the connection of a suction pipeline, and in which, during operation, the steam dome can be wetted by means of a pipe arranged at the end of the steam dome remote from the housing, in such a way that a stream of liquid is formed leading into the region of the worm, characterised in that the pipe is in the form of a ring tube (55) matched to the wall of the steam dome and having outlet openings (56) directed towards the wall.

2. A worm machine having a worm which is rotatable in a housing for embedding radioactive waste in a thermoplastic maß, in particular bitumen, in which on the upper side of the housing, there is arranged a tubular steam dome having a substantially vertical axis for the connection of a suction pipeline, and in which, during operation, the steam dome can be wetted by means of a pipe arranged at the end of the steam dome remote from the housing, in such a way that a stream of liquid is formed leading into the region of the worm, the steam dome being equipped with a casing which extends over the length of the steam dome and has a connection, characterised in that the casing (28) can be alternatively supplied with a coolant (pipeline 63), or a heating medium (pipeline 62), by means of a valve (61).

## Revendications

1. Machine à vis sans fin comprenant une vis pouvant tourner dans un fourreau pour enrober des déchets radioactifs dans une masse thermoplastique, notamment dans du bitume, dans laquelle, à la partie supérieure du fourreau, est disposé un dôme à vapeur de forme tubulaire, à axe sensiblement vertical, pour le raccord d'un conduit d'aspiration, le dôme à vapeur pouvant être arrosé pendant le fonctionnement à l'aide d'un conduit qui est disposé à l'extrémité du dôme à vapeur se trouvant du côté éloigné du fourreau, de manière à créer un courant de liquide menant à la région de la vis, caractérisée en ce que le conduit est le tuyau (55) annulaire, qui est adapté à la paroi du dôme à vapeur et qui présente des ouvertures (56) de sortie dirigées vers la paroi.

2. Maschine à vis sans fin comprenant une vis pouvant tourner dans un fourreau pour enrober des déchets radioactifs dans une masse thermoplastique, notamment dans du bitume, dans laquelle, à la partie supérieure du fourreau, est disposé un dôme à vapeur de forme tubulaire, à axe sensiblement vertical, pour le raccord d'un conduit d'aspiration, le dôme à vapeur pouvant être arrosé pendant le fonctionnement à l'aide d'un conduit qui est disposé à l'extrémité du dôme à vapeur se trouvant du côté éloigné du fourreau, de manière à créer un courant de liquide manent à la région de la vis, le dôme à vapeur étant équipé d'une enveloppe, qui s'étend sur la longuer du dôme à vapeur et qui a un raccord, caractérisée en ce que l'enveloppe (28) peut être alimentée par l'intermédiaire d'une vanne (61) au choix par un agent réfrigérant (conduit 63) ou par un milieu de chauffage (conduit 62).

Fig.1

Fig.2

Fig.3